# EUROPÄISCHE PATENTSCHRIFT

(11) **EP 3 791 460 B1**
(45) Veröffentlichungstag und Bekanntmachung des Hinweises auf die Patenterteilung: **18.05.2022**
(21) Anmeldenummer: 19752939.9
(22) Anmeldetag: 24.07.2019
(51) Int. Cl.: B05C 5/02, H02K 3/38, H02K 15/10, H02K 15/12, B05C 7/02

(54) **ELEKTRISCHE MASCHINE MIT KUNSTSTOFFSCHICHT ALS PHASENTRENNER**
ELECTRIC MACHINE WITH PLASTIC LAYER AS PHASE SEPARATOR
MACHINE ÉLECTRIQUE À COUCHE DE MATIÈRE PLASTIQUE EN TANT QUE SÉPARATEUR DE PHASES

(30) Priorität: 03.08.2018 EP 18187323
(43) Veröffentlichungstag der Anmeldung: 17.03.2021
(73) Patentinhaber: Siemens Aktiengesellschaft, 80333 München (DE)
(72) Erfinder: BÜTTNER, Klaus, 97618 Hollstadt (DE); KATZENBERGER, Tobias, 97631 Bad Königshofen STT Untereßfeld (DE); PLOCHMANN, Bastian, 91413 Neustadt an der Aisch (DE); WARMUTH, Matthias, 97618 Windshausen (DE)
(86) Internationale Anmeldenummer: PCT/EP2019/069883
(87) Internationale Veröffentlichungsnummer: WO 2020/025414

(56) Entgegenhaltungen:
- WO-A1-03/107512
- DE-T5-112012 004 477
- JP-A- S61 207 160
- JP-A- 2006 217 679

## Beschreibung

Die vorliegende Erfindung geht aus von einem Herstellungsverfahren für einen Stator einer rotatorischen elektrischen Maschine,
- wobei der Stator ein Blechpaket aufweist, in das Nuten für die Wicklungen eines mehrphasigen Wicklungssystems eingebracht sind,
- wobei die Wicklungen der einzelnen Phasen sequenziell nacheinander in die Nuten eingeführt werden,
- wobei zwischen dem Einführen der Wicklungen jeweils einer der Phasen und dem Einführen der Wicklungen der jeweils nächsten Phase zumindest auf die Teilwicklungsköpfe der Wicklungen der jeweils einen Phase eine jeweilige Isolierschicht aus Kunststoff aufgespritzt wird.

Die vorliegende Erfindung geht weiterhin aus von einem Stator einer rotatorischen elektrischen Maschine,
- wobei der Stator ein Blechpaket aufweist, in das Nuten für die Wicklungen eines mehrphasigen Wicklungssystems eingebracht sind,
- wobei die Wicklungen der Phasen in die Nuten eingeführt sind,
- wobei zwischen den Teilwicklungsköpfen der Wicklungen von unmittelbar nacheinander eingeführten Phasen eine jeweilige Isolierschicht aus Kunststoff angeordnet ist.

Die vorliegende Erfindung geht weiterhin aus von einer rotatorischen elektrischen Maschine, wobei die elektrische Maschine einen Rotor und einen Stator aufweist.

Rotatorische elektrische Maschinen weisen einen Rotor und einen Stator auf. Der Stator weist ein Blechpaket auf, in das Nuten für die Wicklungen eines mehrphasigen Wicklungssystems eingebracht sind. Die Wicklungen der einzelnen Phasen werden sequenziell nacheinander in die Nuten eingeführt, also bei einem üblichen dreiphasigen Wicklungssystem zuerst die Wicklungen für die erste Phase, dann die Wicklungen für die zweite Phase und schließlich die Wicklungen für die dritte Phase.

Beim Einbringen der Wicklungen der jeweiligen Phase entstehen an beiden Stirnseiten des Stators die Teilwicklungsköpfe der Wicklungen der jeweiligen Phase. Die an je einer der beiden Stirnseiten des Stators angeordneten Teilwicklungsköpfe bilden in ihrer Gesamtheit den jeweiligen Wicklungskopf. Die einzelnen Drähte der Windungen sind mit einer Primärisolierung versehen, meist einem Drahtlack. Durch die Primärisolierung wird zu einem erheblichen Teil die elektrische Spannungsfestigkeit der Phasen gegeneinander und zu Erde oder Masse (auf diesem Potenzial liegt meist das Blechpaket) bewirkt. Weiterhin werden bei der Herstellung derartiger elektrische Maschinen sogenannte Flächenisolierstoffe verwendet, beispielsweise ein sogenannter Nutkasten und/oder ein sogenannter Deckschieber und/oder ein sogenannter Phasentrenner. Der Nutkasten ist ein U-förmiges Profil, das vor dem Einführen der Wicklungen der jeweiligen Phase in die zugehörigen Nuten eingelegt wird. Der Deckschieber ist ein U-förmiges Profil, das nach dem Einführen der Wicklungen der jeweiligen Phase über die in den zugehörigen Nuten befindlichen Wicklungen der jeweiligen Phase aufgelegt wird. Die Phasentrenner werden in den Wicklungsköpfen verwendet, um dort die Teilwicklungsköpfe der Phasen gegeneinander zu isolieren und damit zu trennen.

Im Stand der Technik sind die Phasentrenner in der Regel als flächiges Papier ausgebildet, welches zwischen den einzelnen Phasen einen direkten Kontakt zwischen Drähten unterschiedlicher Phasen und damit mit deutlich unterschiedlichem Potenzial vermeiden soll. Dadurch sollen Teilentladungen und Durchschläge vermieden werden. Es ist ebenso bekannt, als Flächenisolierstoffe eine dünne PET-Folie zu verwenden. Es ist möglich eine reine PET-Folie zu verwenden oder eine PET-Folie, die mit Polyestervlies beschichtet ist oder PET-Folie mit einer beidseitigen Beschichtung aus Aramid-Fasern. Die letztgenannte Folie ist beispielsweise unter dem Handelsnamen Nomex erhältlich. Die Dicke der PET-Folie liegt meist im Bereich zwischen 0,1mm und 1mm.

In fertigungstechnischer Hinsicht ist die Verwendung der Nutkästen und der Deckschieber unproblematisch. Insbesondere können sowohl die Nutkästen als auch die Deckschieber vollautomatisiert appliziert werden. Die Phasentrenner müssen im Stand der Technik hingegen manuell eingelegt werden, und zwar vor dem Einführen der Wicklungen der nächsten Phase in die entsprechenden Nuten. Beim Einführen der Wicklungen der nächsten Phase in die entsprechenden Nuten besteht die Gefahr, dass die Phasentrenner sich verschieben. Die Position der Phasentrenner muss daher nach dem Einführen der Wicklungen der nächsten Phase oder nach dem Einführen der Wicklungen aller Phasen nochmals kontrolliert und eventuell auch korrigiert werden. Insbesondere im Bereich des Nutaustritts, also den stirnseitigen Enden der Nuten, treten häufig Fehler auf, da der Phasentrenner durch die sich beim Einführen der Wicklungen der jeweiligen Phase bewegenden Drahtbündel verschoben wird.

Ein weiteres Problem ist die schlechte Imprägnierbarkeit bei der nachfolgenden Imprägnierung. Da es sich um Flächenisolierstoffe handelt, ist ein Durchfluss des flüssigen Imprägnierungsharzes nicht möglich oder zumindest erschwert. Dadurch können im Bereich der Phasentrenner teilweise größere Ansammlungen von Imprägnierungsharz - sogenannte Harztaschen - entstehen, die beim Aushärten des Imprägnierungsharzes nicht oder zumindest nicht vollständig mit aushärten und somit in der fertigen elektrischen Maschine in ungehärteter Form vorliegen. Ebenso können Bereiche auftreten, in die kein Imprägnierungsharz fließt, so dass in diesen Bereichen keine Verfestigung bewirkt wird. Dies kann ein Qualitätsproblem darstellen, welches aufgrund von mechanischen Belastungen (beispielsweise Vibrationen), aufgrund von thermischen Belastungen oder aufgrund von elektrischen Belastungen bis zum Ausfall der elektrischen Maschine führen kann.

Die Verwendung eines Flächenisolierstoffs als Phasentrenner bietet also zwei signifikante Nachteile. Der eine Nachteil besteht darin, dass die Fertigung nicht oder nur schwer automatisierbar und fehleranfällig ist, so dass eine manuelle Prüfung und teilweise auch Nachbesserungen erforderlich sind. Der andere Nachteil besteht darin, dass ein nachfolgender Imprägnierprozess nicht optimal abläuft, da die Phasentrenner den Fluss des Harzes behindern.

Ein Herstellungsverfahren der eingangs genannten Art, ein Stator einer rotatorischen elektrischen Maschine der eingangs genannten Art und eine rotatorische elektrische Maschine der eingangs genannten Art sind aus der JP S61 207 160 A bekannt.

Aus der JP 2006 217679 A ist ein Stator bekannt, bei dem ein Zwischenschicht-Isoliermaterial, das zum Isolieren zwischen Spulenphasen in einem Mehrphasen-Wechselstrommotor verwendet wird, ein Gewebe umfasst, das aus einer beliebigen Art von Polyesterfasern besteht. Der Stator besteht aus Vakuumimprägnieren eines Spulenendes, das aus dem Zwischenschicht-Isoliermaterial mit duroplastischem Harz besteht.

Die Aufgabe der vorliegenden Erfindung besteht darin, Möglichkeiten zu schaffen, mittels derer, ausgehend von dem zuletzt genannten Stand der Technik, die Isolierschichten derart ausgestaltet werden können, dass in einem auf das Aufbringen der Isolierschichten nachfolgenden Imprägnierprozess der leichte Durchfluss eines Imprägnierungsharzes besonders problemlos und zuverlässig möglich ist.

Die Aufgabe wird durch ein Herstellungsverfahren mit den Merkmalen des Anspruchs 1 gelöst. Vorteilhafte Ausgestaltungen des Herstellungsverfahrens sind Gegenstand der abhängigen Ansprüche 2 bis 8.

Erfindungsgemäß werden bei einem Herstellungsverfahren der eingangs genannten Art die Isolierschichten in Form einer jeweiligen netzartigen Struktur mit Knotenpunkten und sich zwischen den Knotenpunkten erstreckenden strebenartigen Verbindungen gebildet.

Durch diese Vorgehensweise kann nicht nur die jeweilige Isolierschicht auf den Bereich begrenzt werden, auf den es jeweils ankommt, also auf den Bereich des jeweiligen Teilwicklungskopfes bzw. der Teilwicklungsköpfe. Vor allem ist es möglich, die jeweilige Isolierschicht als "luftige", lockere Struktur aufzubringen, so dass ein Durchfluss des Imprägnierungsharzes im nachfolgenden Imprägnierprozess problemlos möglich ist.

Es ist möglich, dass die jeweilige Isolierschicht ausschließlich auf die Teilwicklungsköpfe der Wicklungen der jeweils einen Phase eine jeweilige Isolierschicht aus Kunststoff aufgespritzt wird. Es ist jedoch ebenso möglich, dass die jeweilige Isolierschicht auf die Teilwicklungsköpfe aller zum Zeitpunkt des Aufspritzens der jeweiligen Isolierschicht bereits eingeführten Wicklungen aufgespritzt wird.

Es ist möglich, dass ausschließlich zwischen dem Einführen der Wicklungen jeweils einer der Phasen und dem Einführen der Wicklungen der jeweils nächsten Phase zumindest auf die Teilwicklungsköpfe der Wicklungen der jeweils einen Phase eine jeweilige Isolierschicht aus Kunststoff aufgespritzt wird. Alternativ ist es möglich, dass vor dem Einführen der Wicklungen der zuerst eingeführten Phase eine weitere Isolierschicht aus Kunststoff auf das Blechpaket und/oder nach dem Einführen der Wicklungen der zuletzt eingeführten Phase eine weitere Isolierschicht aus Kunststoff auf die Teilwicklungsköpfe der Wicklungen aller Phasen aufgespritzt wird.

Die Herstellung einer netzartigen Struktur ist auf besonders einfache Weise dadurch realisierbar, dass die Isolierschichten jeweils aus einer Vielzahl von überlagerten Strängen des Kunststoffs bestehen. Zu diesem Zweck können beispielsweise die Isolierschichten mittels eines Düsenkopfs aufgebracht werden, der eine rotierende Austrittsdüse für den Kunststoff aufweist, wobei der Kunststoff in Form eines Strangs aus der rotierenden Austrittsdüse austritt. Der Düsenkopf wird in diesem Fall während des Austretens des Kunststoffs aus der rotierenden Austrittsdüse als Ganzes translatorisch bewegt.

Der Kunststoff kann nach Bedarf sein, solange er die geforderten mechanischen und elektrischen Eigenschaften aufweist. Der Kunststoff kann daher - im Rahmen der geforderten Eigenschaften - nach Bedarf als unter Feuchtigkeit und/oder bei Luftkontakt vernetzender Kunststoff oder als unter Feuchtigkeit und/oder bei Luftkontakt nicht vernetzender Kunststoff ausgebildet sein.

Eine Schmelztemperatur oder Glasübergangstemperatur (genauer: der entsprechende Temperaturbereich) des Kunststoffs sollte oberhalb der maximalen Betriebstemperatur der elektrischen Maschine liegen. Insbesondere sollte die Schmelztemperatur oder Glasübergangstemperatur daher vorzugsweise bei mindestens 120°C liegen, besser bei mindestens 150°C, insbesondere bei mindestens 180°C, beispielsweise bei mindestens 200°C. Der Kunststoff kann ein thermoplastischer Schmelzkleber sein, insbesondere ein Polyolefin. Alternativ kann der Kunststoff ein Duroplast sein. Das Duroplast kann beispielsweise ein unter UV-Licht bei Raumtemperatur vernetzendes Duroplast sein.

Die Aufgabe wird weiterhin durch einen Stator für eine rotatorische elektrische Maschine mit den Merkmalen des Anspruchs 9 gelöst. Vorteilhafte Ausgestaltungen des Stators sind Gegenstand der abhängigen Ansprüche 10 bis 16.

Erfindungsgemäß wird ein Stator der eingangs genannten Art dadurch ausgestaltet, dass die Isolierschichten in Form einer jeweiligen netzartigen Struktur mit Knotenpunkten und sich zwischen den Knotenpunkten erstreckenden strebenartigen Verbindungen ausgebildet sind.

Die Vorteile des erfindungsgemäßen Stators korrespondieren mit denen des Herstellungsverfahrens. Auch die vorteilhaften Ausgestaltungen des Stators und die zugehörigen jeweiligen Vorteile korrespondieren mit denen des Herstellungsverfahrens.

Die Aufgabe wird weiterhin durch eine rotatorische elektrische Maschine mit den Merkmalen des Anspruchs 17 gelöst. Erfindungsgemäß ist bei einer rotatorischen elektrischen Maschine der eingangs genannten Art der Stator als erfindungsgemäßer Stator ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Schnitt durch eine rotatorische elektrische Maschine,
- FIG 2: eine Ansicht eines Blechpakets aus einer Richtung II-II in FIG 1,
- FIG 3: das Blechpaket von FIG 2 von der Seite,
- FIG 4: einen Düsenkopf von der Seite,
- FIG 5: einen weiteren Düsenkopf von der Seite,
- FIG 6: das Blechpaket von FIG 2 mit eingeführten Wicklungen einer Phase,
- FIG 7: das Blechpaket von FIG 6 von der Seite,
- FIG 8: das Blechpaket von FIG 6 mit einer aufgebrachten Isolierschicht,
- FIG 9: das Blechpaket von FIG 8 von der Seite,
- FIG 10: das Blechpaket von FIG 2 mit eingeführten Wicklungen zweier Phasen,
- FIG 11: das Blechpaket von FIG 10 von der Seite,
- FIG 12: das Blechpaket von FIG 10 mit einer aufgebrachten Isolierschicht,
- FIG 13: das Blechpaket von FIG 12 von der Seite,
- FIG 14: das Blechpaket von FIG 2 mit eingeführten Wicklungen dreier Phasen,
- FIG 15: das Blechpaket von FIG 14 von der Seite,
- FIG 16: eine teilweise aufgebrachte Isolierschicht,
- FIG 17: eine teilweise aufgebrachte Isolierschicht und
- FIG 18: den Düsenkopf von FIG 4 von vorne.

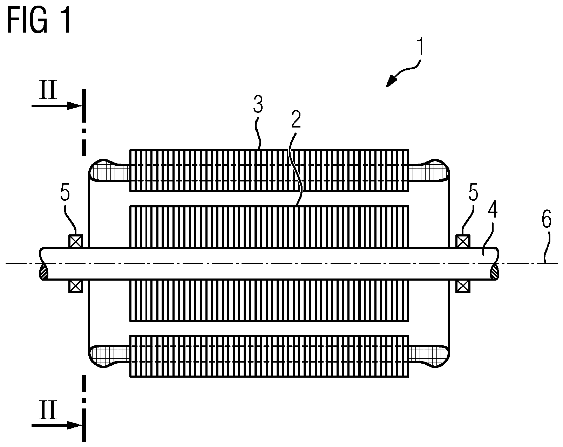

Gemäß FIG 1 weist eine rotatorische elektrische Maschine 1 einen Rotor 2 und einen Stator 3 auf. Der Rotor 2 ist drehfest auf einer Rotorwelle 4 angeordnet, die ihrerseits in Lagern 5 drehbar gelagert ist. Die Rotorwelle 4 und mit ihr der Rotor 2 sind somit um eine Rotationsachse 6 rotierbar. Ein üblicherweise vorhandenes Gehäuse, Lagerschilde und andere Komponenten, die im Rahmen der vorliegenden Erfindung von untergeordneter Bedeutung sind, sind in FIG 1 nicht mit dargestellt.

Soweit nachfolgend die Begriffe "axial", "radial" und "tangential" verwendet werden, sind sie stets auf die Rotationsachse 6 bezogen. "Axial" bedeutet eine Richtung parallel zur Rotationsachse 6. "Radial" bedeutet eine Richtung orthogonal zur Rotationsachse 5 direkt auf die Rotationsachse 6 zu oder von ihr weg. "Tangential" ist eine Richtung, die sowohl orthogonal zur Axialrichtung als auch orthogonal zur Radialrichtung gerichtet ist. "Tangential" ist also eine Richtung, die bei einer konstanten Axialposition und in einem konstanten radialen Abstand von der Rotationsachse 6 kreisförmig um die Rotationsachse 6 herum gerichtet ist.

Sowohl der Rotor 2 als auch der Stator 3 umgeben die Rotationsachse 6. In der Regel ist der Rotor 2 radial innen angeordnet, der Stator 3 radial außen. In diesem Fall ist die elektrische Maschine 1 als Innenläufer ausgebildet. Es ist jedoch auch die umgekehrte Anordnung möglich. In diesem Fall ist die elektrische Maschine 1 als Außenläufer ausgebildet.

Der Stator 3 wird auf eine Art und Weise hergestellt, die nachstehend in Verbindung mit den weiteren Figuren näher erläutert wird.

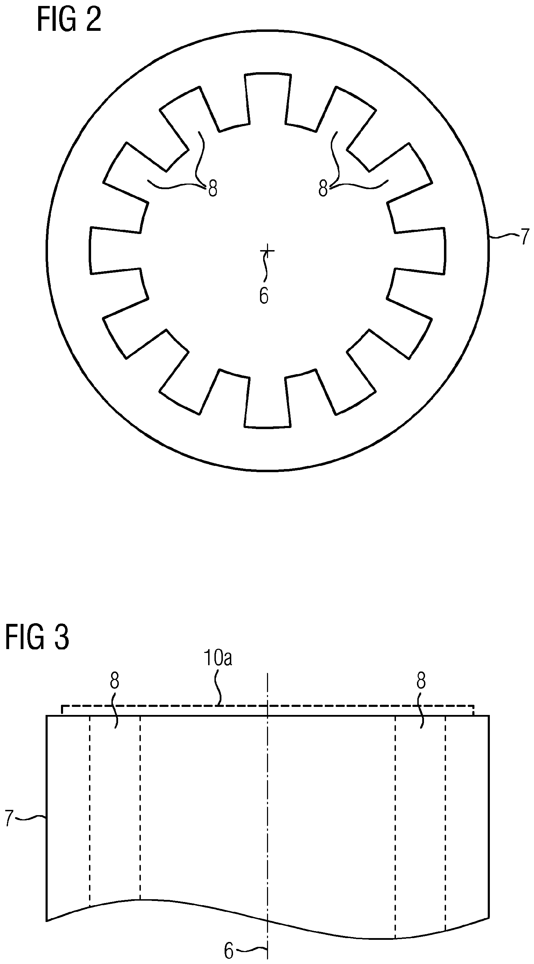

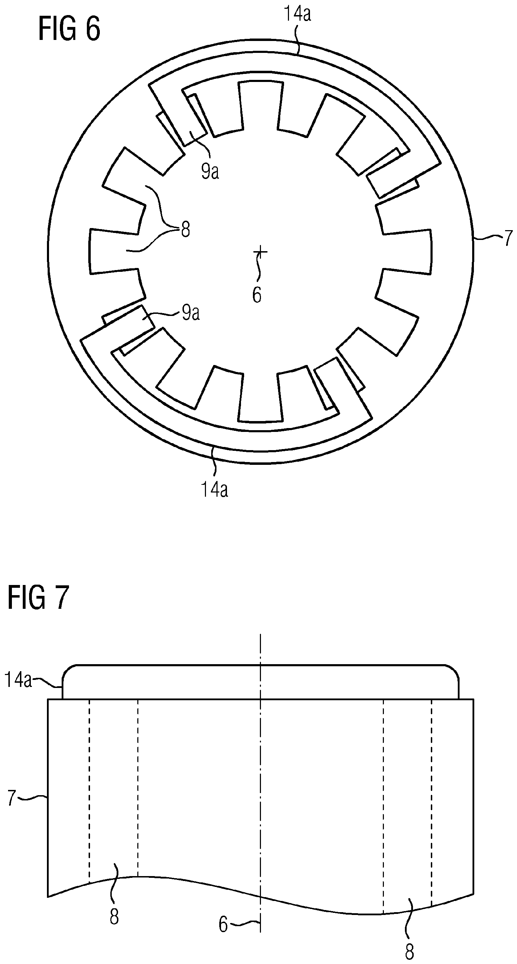

Zum Herstellen des Stators 3 wird zunächst ein Blechpaket 7 des Stators 3 hergestellt. Das Herstellen des Blechpakets 7 erfolgt auf konventionelle Art und Weise und muss daher nicht näher erläutert werden. Die FIG 2 und 3 zeigen das Blechpaket 7. In das Blechpaket 7 sind gemäß den FIG 2 und 3 Nuten 8 eingebracht. Von den Nuten 8 sind in FIG 2 nur einige mit ihrem Bezugszeichen versehen. In FIG 3 sind nur die beiden in der Ansicht von FIG 3 äußersten Nuten 8 dargestellt. Die Nuten 8 sind entsprechend der Darstellung der FIG 2 und 3 zunächst noch leer. In die Nuten 8 werden im Laufe der Herstellung des Stators 3 die Wicklungen 9a, 9b, 9c (siehe die FIG 6 bis 15) eines mehrphasigen Wicklungssystems eingeführt. Die Wicklungen 9a, 9b, 9c der einzelnen Phasen werden sequenziell nacheinander in die Nuten 8 eingeführt. In der Regel ist das Wicklungssystem dreiphasig.

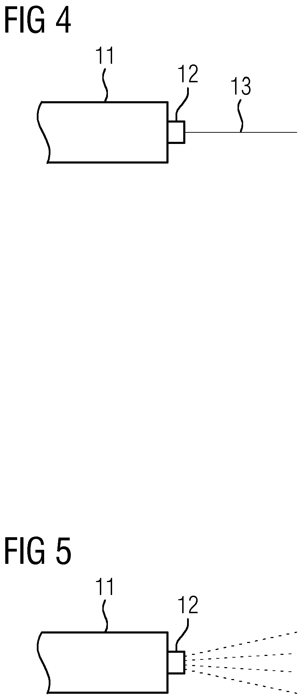

Es ist möglich, dass entsprechend der Darstellung in den FIG 2 und 3 bereits vor dem Einführen der Wicklungen 9a der ersten Phase eine Isolierschicht 10a auf das Blechpaket 7 aufgebracht wird. Falls dies der Fall sein sollte, wird die Isolierschicht 10a aus Kunststoff auf das Blechpaket 7 aufgespritzt. Sowohl beim Aufspritzen als auch bei einem Aufsprühen wird entsprechend der Darstellung in den FIG 4 und 5 der Kunststoff mittels eines Düsenkopfs 11 aufgebracht, wobei der Düsenkopf 11 eine Austrittsdüse 12 für den Kunststoff aufweist. Der Unterschied zwischen Aufspritzen und Aufsprühen besteht darin, dass der Kunststoff beim Aufspritzen entsprechend der Darstellung als Strahl oder Strang 13 aus der Austrittsdüse 12 austritt, während der Kunststoff beim Aufsprühen durch die Austrittsdüse 12 in kleine Tröpfchen zerstäubt wird. Aufgrund des Umstands, dass die Isolierschicht 10a nur optional vorhanden ist, ist sie nur in FIG 3 und auch dort nur gestrichelt dargestellt. Die Schichtdicke der Isolierschicht 10a kann nach Bedarf gewählt werden. Sie kann im Bereich von 0,1 mm bis 1 mm liegen. Diese Werte können im Einzelfall auch unterschritten oder überschritten werden.

Als nächstes werden die Wicklungen 9a der ersten Phase in die entsprechenden Nuten 8 eingeführt. Das Einführen der Wicklungen 9a der ersten Phase als solches erfolgt auf konventionelle Art und Weise und muss daher nicht näher erläutert werden. Die FIG 6 und 7 zeigen den entsprechenden Zwischenzustand bei der Herstellung des Stators 3. Von Bedeutung ist insbesondere, dass Teile der Wicklungen 9a - die sogenannten Teilwicklungsköpfe 14a - in Axialrichtung über das Blechpaket 7 hinausragen. In den Teilwicklungsköpfen 14a verlaufen die Drähte der Wicklungen 9a von Nut 8 zu Nut 8.

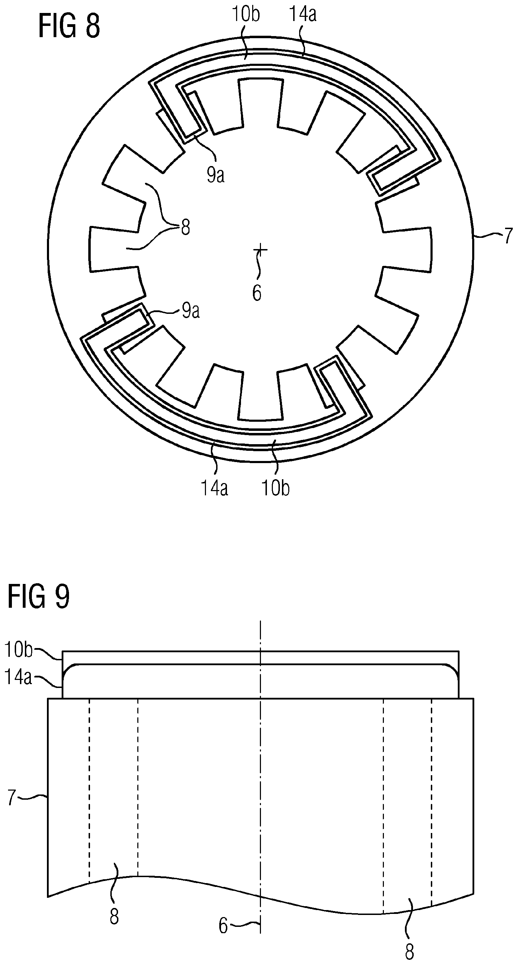

Nach dem Einführen der Wicklungen 9a der ersten Phase, aber vor dem Einführen der Wicklungen 9b der zweiten Phase wird auf die Teilwicklungsköpfe 14a eine Isolierschicht 10b aufgebracht. Die FIG 8 und 9 zeigen den entsprechenden Zustand. Das Aufbringen der Isolierschicht 10b erfolgt analog zum Aufbringen der Isolierschicht 10a. Im Gegensatz zur Isolierschicht 10a ist die Isolierschicht 10b jedoch stets vorhanden. Die Isolierschicht 10b ist entsprechend der Darstellung in den FIG 8 und 9 ausschließlich axial auf den Teilwicklungskopf 14a der ersten Phase aufgebracht. In der Regel ist die Isolierschicht 10b jedoch zusätzlich auch radial innen und/oder radial außen auf den Teilwicklungskopf 14a der ersten Phase aufgebracht.

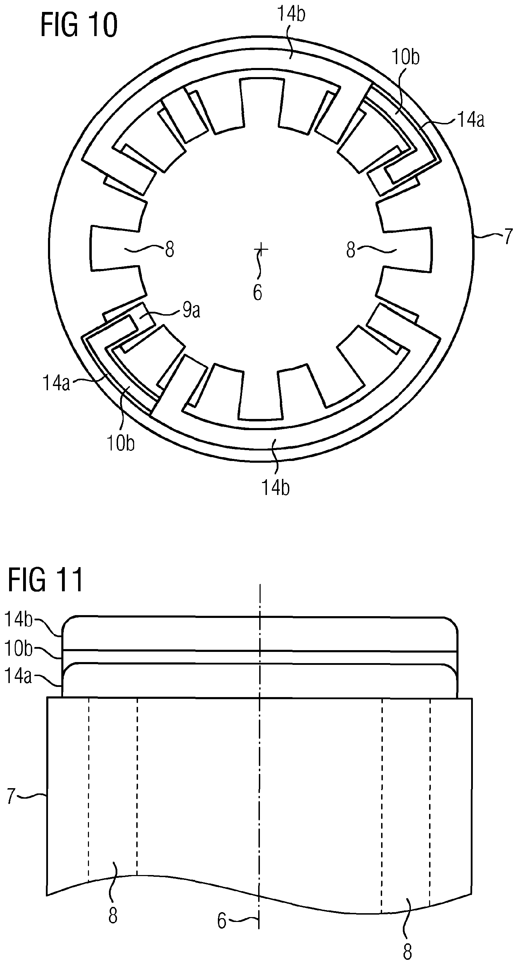

Nach dem Aufbringen der Isolierschicht 10b werden die Wicklungen 9b der zweiten Phase in die entsprechenden Nuten 8 eingeführt. Das Einführen der Wicklungen 9b der zweiten Phase als solches erfolgt auf konventionelle Art und Weise und muss daher nicht näher erläutert werden. Die FIG 10 und 11 zeigen den entsprechenden Zwischenzustand bei der Herstellung des Stators 3. Von Bedeutung ist insbesondere, dass Teile der Wicklungen 9b - die Teilwicklungsköpfe 14b - in Axialrichtung über das Blechpaket 7 hinausragen. In den Teilwicklungsköpfen 14b verlaufen die Drähte der Wicklungen 9b von Nut 8 zu Nut 8.

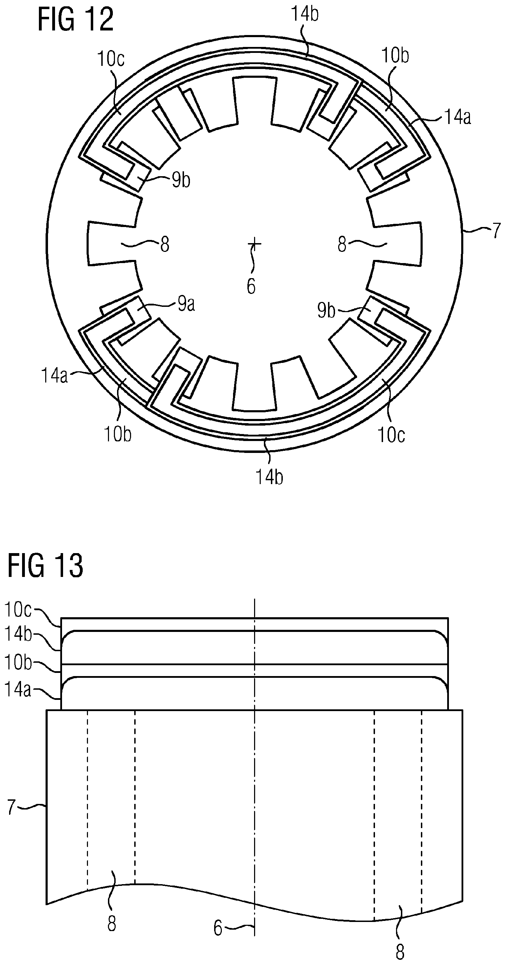

Nach dem Einführen der Wicklungen 9b der zweiten Phase, aber vor dem Einführen der Wicklungen 9c der dritten Phase wird auf die Teilwicklungsköpfe 14b eine Isolierschicht 10c aufgebracht. Die FIG 12 und 13 zeigen den entsprechenden Zustand. Das Aufbringen der Isolierschicht 10c erfolgt analog zum Aufbringen der Isolierschicht 10a. Analog zur Isolierschicht 10b ist auch die Isolierschicht 10c stets vorhanden. Die Isolierschicht 10c ist - analog zur Isolierschicht 10b - entsprechend der Darstellung in den FIG 12 und 13 ausschließlich axial auf den Teilwicklungskopf 14b der zweiten Phase aufgebracht. In der Regel ist die Isolierschicht 10c jedoch zusätzlich auch radial innen und/oder radial außen auf den Teilwicklungskopf 14b der zweiten Phase aufgebracht.

Es ist möglich, dass die Isolierschicht 10c ausschließlich auf die Teilwicklungsköpfe 14b der Wicklungen 9b der zweiten Phase aufgebracht wird. Es ist jedoch alternativ auch möglich, dass die Isolierschicht 10c zusätzlich auch auf die Teilwicklungsköpfe 14a der Wicklungen 9a der ersten Phase aufgebracht wird.

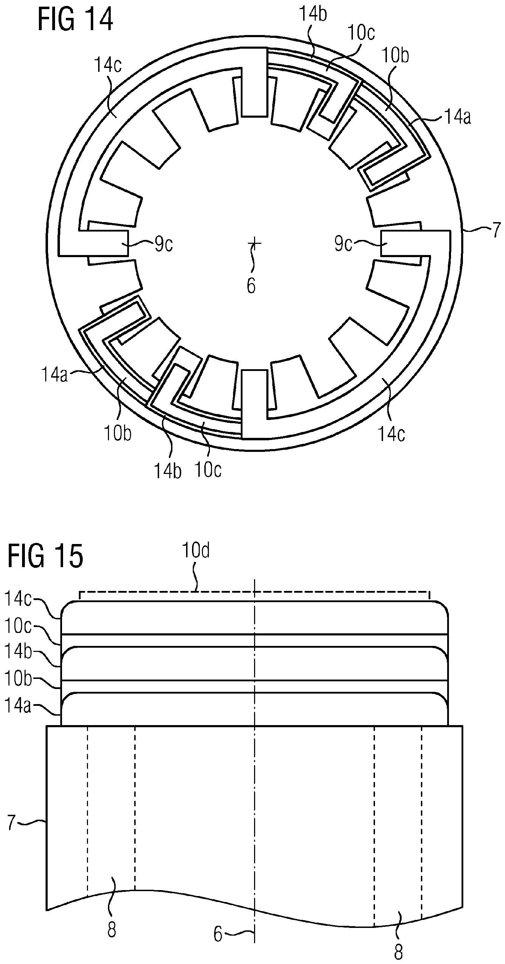

Nach dem Aufbringen der Isolierschicht 10c werden die Wicklungen 9c der dritten Phase in die entsprechenden Nuten 8 eingeführt. Das Einführen der Wicklungen 9c der dritten Phase als solches erfolgt auf konventionelle Art und Weise und muss daher nicht näher erläutert werden. Die FIG 14 und 15 zeigen den entsprechenden Zustand bei der Herstellung des Stators 3. Von Bedeutung ist insbesondere, dass Teile der Wicklungen 9c - die Teilwicklungsköpfe 14c - in Axialrichtung über das Blechpaket 7 hinausragen. In den Teilwicklungsköpfen 14c verlaufen die Drähte der Wicklungen 9c von Nut 8 zu Nut 8.

Mit dem Einführen der Wicklungen 9c der dritten Phase ist das erfindungsgemäße Herstellungsverfahren abgeschlossen. Es ist jedoch möglich, dass nach dem Einführen der Wicklungen 9a bis 9c der Phasen eine Isolierschicht 10d auf die Teilwicklungsköpfe 14a bis 14c aufgebracht wird. Falls dies der Fall sein sollte, wird die Isolierschicht 10d analog zu den anderen Isolierschichten 10a bis 10c aufgespritzt. Aufgrund des Umstands, dass die Isolierschicht 10d nur optional vorhanden ist, ist sie nur in FIG 15 und auch dort nur gestrichelt dargestellt. Es ist möglich, dass die Isolierschicht 10d ausschließlich axial auf die Teilwicklungsköpfe 14a bis 14c aufgebracht wird. Es ist jedoch alternativ auch möglich, dass die Isolierschicht 10d zusätzlich auch radial innen und/oder radial außen auf die Teilwicklungsköpfe 14a bis 14c aufgebracht wird.

Weiterhin kann abschließend noch ein Tränken in Gießharz erfolgen. Dieser Schritt ist ebenfalls konventionell ausgestaltet und muss daher nicht näher erläutert werden.

Aufgrund der erfindungsgemäßen Art und Weise der Herstellung des Stators 3 ist somit zwischen den Teilwicklungsköpfen 14a bis 14c von unmittelbar nacheinander eingeführten Phasen eine jeweilige Isolierschicht 10b, 10c aus Kunststoff angeordnet. Die Isolierschichten 10b, 10c sind also, bezogen auf die jeweilige Isolierschicht 10b, 10c, jeweils zwischen allen näher am Stator 3 angeordneten Teilwicklungsköpfen 14a, 14b und den weiter vom Stator 3 entfernt angeordneten Teilwicklungsköpfen 14b, 14c angeordnet. Vom Ansatz her gilt für die Isolierschichten 10a, 10d das gleiche, jedoch mit dem Unterschied, dass hier die Aufteilung entartet ist, da in diesen beiden Fällen, bezogen auf die jeweilige Isolierschicht 10a, 10d, alle Teilwicklungsköpfe 14a bis 14c auf derselben Seite der jeweiligen Isolierschicht 10a, 10d angeordnet sind.

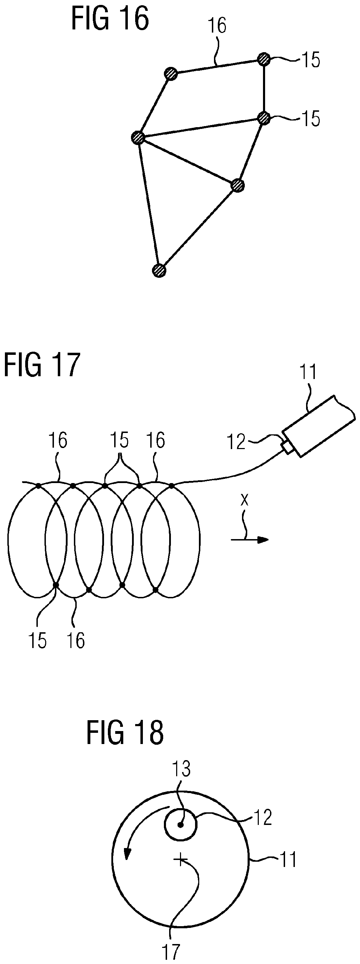

Die Isolierschichten 10a bis 10d werden entsprechend der Darstellung in FIG 16 jeweils in Form einer jeweiligen netzartigen Struktur mit Knotenpunkten 15 und strebenartigen Verbindungen 16 gebildet. Die strebenartigen Verbindungen 16 erstrecken sich jeweils zwischen den Knotenpunkten 15. Beispielsweise können die Isolierschichten 10a bis 10d entsprechend der Darstellung in FIG 17 jeweils aus einer Vielzahl von überlagerten Strängen 13 des Kunststoffs bestehen.

Zum Aufbringen einer derartigen netzartigen Struktur ist der Düsenkopf 11 vorzugsweise entsprechend FIG 4 ausgebildet, so dass also der Kunststoff als Strahl oder Strang 13 aus der Austrittsdüse 12 austritt. Insbesondere ist es entsprechend der Darstellung in FIG 18 - siehe ergänzend FIG 4 möglich, dass der Düsenkopf 11 eine rotierende Austrittsdüse 12 aufweist. In diesem Fall wird die Austrittsdüse 12 um eine Achse 17 rotiert, und zwar während des Austretens des Kunststoffs aus der rotierenden Austrittsdüse 12. Weiterhin wird der Düsenkopf 11 während des Austretens des Kunststoffs aus der rotierenden Austrittsdüse 12 als Ganzes translatorisch bewegt. Dies ist in FIG 17 durch einen Richtungspfeil x angedeutet. In diesem Fall bestehen die Isolierschichten 10a bis 10d aus einer Vielzahl von zusammenhängenden Ringen mit einem Durchmesser, die jeweils um einen Versatz gegeneinander versetzt sind. Vorzugsweise wird der Düsenkopf 11 während einer vollständigen Rotation der Austrittsdüse 12 um die Achse 17 nur um einen Versatz bewegt, der kleiner als der Durchmesser ist.

Der Kunststoff als solcher kann nach Bedarf bestimmt werden. Es kann sich beispielsweise um einen Kunststoff handeln, der unter Feuchtigkeit und/oder bei Luftkontakt vernetzt. Ebenso kann es sich aber auch um einen Kunststoff handeln, der unter Feuchtigkeit und/oder bei Luftkontakt nicht vernetzt. Die Schmelztemperatur des Kunststoffs sollte vorzugsweise bei mindestens 120°C liegen, besser bei mindestens 150°C, insbesondere bei mindestens 180°C, beispielsweise bei mindestens 200°C. Gleiches gilt für die Glasübergangstemperatur, welche - insbesondere bei einem thermoplastischen Schmelzkleber - unterhalb der Schmelztemperatur oder - insbesondere bei einem Duroplast - unterhalb der Zersetzungstemperatur liegt. Derartige Kunststoffe sind Fachleuten bekannt. Beispielsweise kann der Kunststoff ein thermoplastischer Schmelzkleber sein, insbesondere ein Polyolefin. Alternativ kann es sich um ein Duroplast handeln, insbesondere ein unter UV-Licht bei Raumtemperatur vernetzendes Duroplast.

Die Größe und die Beschaffenheit der Isolierschichten 10a bis 10d kann nach Bedarf eingestellt werden. Einfluss auf die Größe und die Beschaffenheit der Isolierschichten 10a bis 10d haben insbesondere
- die Art des verwendeten Kunststoffs,
- die Temperatur des Kunststoffs beim Austreten aus der Austrittsdüse 12,
- der Spritzdruck, mit welchem der Kunststoff aus der Austrittsdüse 12 austritt,
- die Geschwindigkeit, mit welcher der Kunststoff aus der Austrittsdüse 12 austritt,
- der Abstand der Austrittsdüse 12 vom jeweiligen Untergrund,
- die Drehzahl, mit welcher die Austrittsdüse 12 rotiert, und
- die Geschwindigkeit, mit welcher der Düsenkopf 11 translatorisch bewegt wird.

In einem konkreten Versuch wurde beispielsweise ein Klebstoff auf Basis von Polyolefin mit einer Schmelztemperatur von ca. 200°C verwendet. Die Temperatur des Kunststoffs beim Austreten aus der Austrittsdüse 12 betrug 220°C, der Spritzdruck 3 bar. Der Kunststoff trat mit einer Geschwindigkeit von ca. 5m/s als Strang 13 aus der Austrittsdüse 12 aus. Der Abstand der Austrittsdüse 12 vom jeweiligen Untergrund betrug ca. 8 cm, die Drehzahl der Austrittsdüse 12 lag bei 600 Umdrehungen/min. Die translatorische Geschwindigkeit lag bei 3cm/s. Die aufgebrachten Isolierschichten 10a bis 10d hafteten sehr gut auf ihrem Untergrund. Ein Verrutschen beim Einführen der jeweils nächsten Wicklungen 9a bis 9c war nicht zu beobachten.

Zusammengefasst betrifft die vorliegende Erfindung somit folgenden Sachverhalt:
Ein Stator 3 einer rotatorischen elektrischen Maschine 1 weist ein Blechpaket 7 auf, in das Nuten 8 für die Wicklungen 9a bis 9c eines mehrphasigen Wicklungssystems eingebracht sind. In die Nuten 8 werden sequenziell nacheinander die Wicklungen 9a bis 9c der einzelnen Phasen eingeführt. Zwischen dem Einführen der Wicklungen 9a, 9b jeweils einer der Phasen und dem Einführen der Wicklungen 9b, 9c der jeweils nächsten Phase wird zumindest auf die Teilwicklungsköpfe 14a, 14b der Wicklungen 9a, 9b der jeweils einen Phase eine jeweilige Isolierschicht 10b, 10c aus Kunststoff aufgespritzt. Die Isolierschichten 10a bis 10d werden jeweils in Form einer netzartigen Struktur mit Knotenpunkten 15 und sich zwischen den Knoten Punkten 15 erstreckenden strebenartigen Verbindungen 16 gebildet.

Die vorliegende Erfindung weist viele Vorteile auf. Insbesondere ist das erfindungsgemäße Herstellungsverfahren vollautomatisierbar. Das Aufbringen der Isolierschichten 10a bis 10d kann beispielsweise mittels eines Roboters erfolgen. Die Isolierschichten 10a bis 10d können weiterhin ohne weiteres als poröse Struktur aufgebracht werden, so dass ein flächiges, verschmolzenes Gitternetz aus den Knotenpunkten 15 und den strebenartigen Verbindungen 16 entsteht. Die Isolierschichten 10a bis 10d weisen eine sehr gute Haftung auf dem jeweiligen Untergrund (Blechpaket 7 und Teilwicklungsköpfe 14a bis 14c) auf. Mit ihrem Untergrund sind die Isolierschichten 10a bis 10d also verklebt. Sie sind bereits wenige Sekunden nach dem Aufbringen erkaltet und danach klebfrei. Mit dem auf ihnen aufliegenden Teilwicklungskopf 14a bis 14c sind sie hingegen nicht verklebt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie er durch die beigefügten Ansprüche definiert ist, zu verlassen.

## Patentansprüche

1. Herstellungsverfahren für einen Stator (3) für eine rotatorische elektrische Maschine (1),
- wobei der Stator (3) ein Blechpaket (7) aufweist, in das Nuten (8) für die Wicklungen (9a bis 9c) eines mehrphasigen Wicklungssystems eingebracht sind,
- wobei die Wicklungen (9a bis 9c) der einzelnen Phasen sequenziell nacheinander in die Nuten (8) eingeführt werden,
- wobei zwischen dem Einführen der Wicklungen (9a,9b) jeweils einer der Phasen und dem Einführen der Wicklungen (9b,9c) der jeweils nächsten Phase zumindest auf die Teilwicklungsköpfe (14a, 14b) der Wicklungen (9a,9b) der jeweils einen Phase eine jeweilige Isolierschicht (10b,10c) aus Kunststoff aufgespritzt wird,
**dadurch gekennzeichnet, dass** die genannten jeweiligen Isolierschichten (10b, 10c) jeweils in Form einer netzartigen Struktur mit Knotenpunkten (15) und sich zwischen den Knotenpunkten (15) erstreckenden strebenartigen Verbindungen (16) gebildet werden.

2. Herstellungsverfahren nach Anspruch 1, **dadurch gekennzeichnet , dass** die jeweilige Isolierschicht (10c) auf die Teilwicklungsköpfe (14a,14b) aller zum Zeitpunkt des Aufspritzens der jeweiligen Isolierschicht (10c) bereits eingeführten Wicklungen (9a,9b) aufgespritzt wird.

3. Herstellungsverfahren nach Anspruch 1 oder 2, **dadurch gekennzeichnet, dass** vor dem Einführen der Wicklungen (9a) der zuerst eingeführten Phase eine weitere Isolierschicht (10a) aus Kunststoff auf das Blechpaket (7) und/oder nach dem Einführen der Wicklungen (9c) der zuletzt eingeführten Phase eine weitere Isolierschicht (10d) aus Kunststoff auf die Teilwicklungsköpfe (14a bis 14c) der Wicklungen (9a bis 9c) aller Phasen aufgespritzt wird, wobei die genannten auf das Blechpaket (7) aufgespritzten und/oder nach dem Einführen der Wicklungen (9c) der zuletzt eingeführten Phase auf die Teilwicklungsköpfe (14a bis 14c) der Wicklungen (9a bis 9c) aller Phasen aufgespritzten weiteren Isolierschichten (10a, 10d) jeweils in Form einer netzartigen Struktur mit Knotenpunkten (15) und sich zwischen den Knotenpunkten (15) erstreckenden strebenartigen Verbindungen (16) gebildet werden.

4. Herstellungsverfahren nach Anspruch 1, 2 oder 3, **dadurch gekennzeichnet, dass** die Isolierschichten (10a bis 10d) jeweils aus einer Vielzahl von überlagerten Strängen (13) des Kunststoffs bestehen.

5. Herstellungsverfahren nach Anspruch 4, **dadurch gekennzeichnet, dass** die Isolierschichten (10a bis 10d) mittels eines Düsenkopfs (11) aufgebracht werden, der eine rotierende Austrittsdüse (12) für den Kunststoff aufweist, dass der Kunststoff in Form eines Strangs (13) aus der rotierenden Austrittsdüse (12) austritt und dass der Düsenkopf (11) während des Austretens des Kunststoffs aus der rotierenden Austrittsdüse (12) als Ganzes translatorisch bewegt wird.

6. Herstellungsverfahren nach einem der obigen Ansprüche,
**dadurch gekennzeichnet, dass** der Kunststoff als unter Feuchtigkeit und/oder bei Luftkontakt vernetzender Kunststoff oder als unter Feuchtigkeit und/oder bei Luftkontakt nicht vernetzender Kunststoff ausgebildet ist.

7. Herstellungsverfahren nach einem der obigen Ansprüche,
**dadurch gekennzeichnet, dass** eine Schmelztemperatur oder Glasübergangstemperatur des Kunststoffs bei mindestens 120°C liegt, besser bei mindestens 150°C, insbesondere bei mindestens 180°C, beispielsweise bei mindestens 200°C.

8. Herstellungsverfahren nach einem der obigen Ansprüche,
**dadurch gekennzeichnet, dass** der Kunststoff ein thermoplastischer Schmelzkleber ist, insbesondere ein Polyolefin, oder ein Duroplast ist, insbesondere ein unter UV-Licht bei Raumtemperatur vernetzendes Duroplast.

9. Stator für eine rotatorische elektrische Maschine (1),
- wobei der Stator ein Blechpaket (7) aufweist, in das Nuten (8) für die Wicklungen (9a bis 9c) eines mehrphasigen Wicklungssystems eingebracht sind,
- wobei die Wicklungen (9a bis 9c) der einzelnen Phasen sequenziell nacheinander in die Nuten (8) eingeführt sind,
- wobei zwischen den Teilwicklungsköpfen (14a bis 14c) der Wicklungen (9a bis 9c) von unmittelbar nacheinander eingeführten Phasen eine jeweilige Isolierschicht (10b,10c) aus Kunststoff aufgespritzt ist,
**dadurch gekennzeichnet, dass** die genannten jeweiligen Isolierschichten (10b, 10c) in Form einer jeweiligen netzartigen Struktur mit Knotenpunkten (15) und sich zwischen den Knotenpunkten (15) erstreckenden strebenartigen Verbindungen (16) ausgebildet sind.

10. Stator nach Anspruch 9, **dadurch gekennzeichnet, dass** die jeweilige Isolierschicht (10b, 10c), bezogen auf die jeweilige Isolierschicht (10b,10c), zwischen allen näher am Stator (3) angeordneten Teilwicklungsköpfen (14a,14b) und den weiter vom Stator (3) entfernt angeordneten Teilwicklungsköpfen (14b,14c) angeordnet ist.

11. Stator nach Anspruch 9 oder 10, **dadurch gekennzeichnet, dass** zwischen dem Blechpaket (7) und den Teilwicklungsköpfen (14a bis 14c) der Wicklungen (9a bis 9c) und/oder auf den Teilwicklungsköpfen (14a bis 14c) der Wicklungen (9a bis 9c) an der vom Blechpaket (7) beabstandeten Seite jeweils eine weitere Isolierschicht (10d) aus Kunststoff angeordnet ist, wobei die genannten auf das Blechpaket (7) aufgespritzten und/oder nach dem Einführen der Wicklungen (9c) der zuletzt eingeführten Phase auf die Teilwicklungsköpfe (14a bis 14c) der Wicklungen (9a bis 9c) aller Phasen aufgespritzten weiteren Isolierschichten (10a, 10d) in Form einer jeweiligen netzartigen Struktur mit Knotenpunkten (15) und sich zwischen den Knotenpunkten (15) erstreckenden strebenartigen Verbindungen (16) ausgebildet sind.

12. Stator nach einem der Ansprüche 9 bis 11, **dadurch gekennzeichnet, dass** die Isolierschichten (10a bis 10d) jeweils aus einer Vielzahl von überlagerten Strängen des Kunststoffs bestehen.

13. Stator nach Anspruch 12, **dadurch gekennzeichnet, dass** die Isolierschichten (10a bis 10d) aus einer Vielzahl von zusammenhängenden Ringen mit einem Durchmesser bestehen, die jeweils um einen Versatz gegeneinander versetzt sind, und dass der Versatz kleiner als der Durchmesser ist.

14. Stator nach einem der Ansprüche 9 bis 13, **dadurch gekennzeichnet , dass** der Kunststoff als unter Feuchtigkeit und/oder bei Luftkontakt vernetzender Kunststoff oder als unter Feuchtigkeit und/oder bei Luftkontakt nicht vernetzender Kunststoff ausgebildet ist.

15. Stator nach einem der Ansprüche 9 bis 14, **dadurch gekennzeichnet , dass** eine Schmelztemperatur oder Glasübergangstemperatur des Kunststoffs bei mindestens 120°C liegt, besser bei mindestens 150°C, insbesondere bei mindestens 180°C, beispielsweise bei mindestens 200°C.

16. Stator nach einem der Ansprüche 9 bis 15, **dadurch gekennzeichnet , dass** der Kunststoff ein thermoplastischer Schmelzkleber ist, insbesondere ein Polyolefin, oder ein Duroplast ist, insbesondere ein unter UV-Licht bei Raumtemperatur vernetzendes Duroplast.

17. Rotatorische elektrische Maschine, wobei die elektrische Maschine einen Rotor (2) und einen Stator (3) aufweist,
**dadurch gekennzeichnet, dass** der Stator (3) der elektrischen Maschine als Stator nach einem der Ansprüche 9 bis 16 ausgebildet ist.

## Claims

1. Production method for a stator (3) for a rotary electric machine (1),
- wherein the stator (3) has a laminated core (7) in which grooves (8) for the windings (9a to 9c) of a multi-phase winding system are formed,
- wherein the windings (9a to 9c) of the individual phases are inserted one after the other sequentially into the grooves (8),
- wherein between the insertion of the windings (9a, 9b) of one of the phases and the insertion of the windings (9b, 9c) of the next phase, a respective insulating layer (10b, 10c) of plastic is sprayed at least onto the partial winding overhangs (14a, 14b) of the windings (9a, 9b) of the one phase,
**characterised in that**
said respective insulating layers (10b, 10c) are each formed as a mesh-like structure having junctions (15) and brace-like connections (16) running between the junctions (15).

2. Production method according to claim 1,
**characterised in that**
the respective insulating layer (10c) is sprayed onto the partial winding overhangs (14a, 14b) of all the windings (9a, 9b) already inserted at the time of spraying the respective insulating layer (10c).

3. Production method according to claim 1 or 2,
**characterised in that**
before the insertion of the windings (9a) of the phase inserted first, a further insulating layer (10a) of plastic is sprayed onto the laminated core (7) and/or after the insertion of the windings (9c) of the phase inserted last, a further insulating layer (10d) of plastic is sprayed onto the partial winding overhangs (14a to 14c) of the windings (9a to 9c) of all the phases, wherein said further insulation layers (10a, 10d) sprayed onto the laminated core (7), and/or after the insertion of the windings (9c) of the phase inserted last, onto the partial winding overhangs (14a to 14c) of the windings (9a to 9c) of all the phases, are each formed as a mesh-like structure having junctions (15) and brace-like connections (16) running between the junctions (15).

4. Production method according to claim 1, 2 or 3,
**characterised in that**
the insulating layers (10a to 10d) each consist of a plurality of superimposed strands (13) of the plastic.

5. Production method according to claim 4,
**characterised in that**
the insulating layers (10a to 10d) are applied by means of a nozzle head (11) which has a rotating outlet nozzle (12) for the plastic, **in that** the plastic emerges from the rotating outlet nozzle (12) in the form of a strand (13) and **in that** the nozzle head (11) is moved translationally as a whole during the emergence of the plastic from the rotating outlet nozzle (12).

6. Production method according to one of the above claims,
**characterised in that**
the plastic is designed as a plastic which cross-links when exposed to moisture and/or on contact with the air or as a plastic which does not cross-link when exposed to moisture and/or on contact with the air.

7. Production method according to one of the above claims,
**characterised in that**
a melting temperature or glass transition temperature of the plastic is at least 120°C, better at least 150°C, in particular, at least 180°C, for example, at least 200°C.

8. Production method according to one of the above claims,
**characterised in that**
the plastic is a thermoplastic hot-melt adhesive, in particular a polyolefin, or a thermoset, in particular a thermoset which cross-links under UV light at room temperature.

9. Stator fora rotary electric machine (1),
- wherein the stator has a laminated core (7) in which grooves (8) for the windings (9a to 9c) of a multi-phase winding system are formed,
- wherein the windings (9a to 9c) of the individual phases are inserted one after the other sequentially into the grooves (8),
- wherein an insulating layer (10b, 10c) of plastic is sprayed between the partial winding overhangs (14a to 14c) of the windings (9a to 9c) of phases inserted immediately one after the other,
**characterised in that**
said respective insulating layers (10b, 10c) are each formed as a mesh-like structure having junctions (15) and brace-like connections (16) running between the junctions (15).

10. Stator according to claim 9,
**characterised in that**
the respective insulating layer (10b, 10c), with respect to the respective insulating layer (10b, 10c), is arranged between all the partial winding overhangs (14a, 14b) arranged closer to the stator (3) and the partial winding overhangs (14b, 14c) arranged further from the stator (3).

11. Stator according to claim 9 or 10,
**characterised in that**
a further insulating layer (10d) of plastic is arranged between the laminated core (7) and the partial winding overhangs (14a to 14c) of the windings (9a to 9c) and/or on the partial winding overhangs (14a to 14c) of the windings (9a to 9c) on the side facing away from the laminated core (7) in each case, wherein said further insulation layers (10a, 10d) sprayed onto the laminated core (7), and/or after the insertion of the windings (9c) of the phase inserted last, onto the partial winding overhangs (14a to 14c) of the windings (9a to 9c) of all the phases, are each formed as a mesh-like structure having junctions (15) and brace-like connections (16) running between the junctions (15).

12. Stator according to one of claims 9 to 11,
**characterised in that**
the insulating layers (10a to 10d) each consist of a plurality of superimposed strands of the plastic.

13. Stator according to claim 12,
**characterised in that**
the insulating layers (10a to 10d) consist of a plurality of coherent rings having a diameter which are each offset from one another by an offset, and that the offset is smaller than the diameter.

14. Stator according to one of claims 9 to 13,
**characterised in that**
the plastic is designed as a plastic which cross-links when exposed to moisture and/or on contact with the air or as a plastic which does not cross-link when exposed to moisture and/or on contact with the air.

15. Stator according to one of claims 9 to 14,
**characterised in that**
a melting temperature or glass transition temperature of the plastic is at least 120°C, better at least 150°C, in particular, at least 180°C, for example, at least 200°C.

16. Stator according to one of claims 9 to 15,
**characterised in that**
the plastic is a thermoplastic hot-melt adhesive, in particular a polyolefin, or a thermoset, in particular a thermoset which cross-links under UV light at room temperature.

17. Rotary electric machine, wherein the electric machine has a rotor (2) and a stator (3),
**characterised in that**
the stator (3) of the electric machine is designed as a stator according to one of claims 9 to 16.

## Revendications

1. Procédé de fabrication d'un stator (3) d'une machine (1) électrique tournante,
- dans lequel le stator (3) a un paquet (7) de tôle, dans lequel sont ménagées des encoches (8) pour les enroulements (9a à 9c) d'un système d'enroulement polyphasé,
- dans lequel on introduit les enroulements (9a à 9c) des diverses phases séquentiellement les unes après les autres dans les encoches (8),
- dans lequel, entre l'introduction des enroulements (9a, 9b) de respectivement l'une des phases et l'introduction des enroulements (9b, 9c) de respectivement la phase suivante, on applique au pistolet une couche (10b, 10c) isolante respective au moins sur les têtes (14a, 14b) partielles des enroulements (9a, 9b) de respectivement une phase,
**caractérisé en ce que** l'on forme lesdites couches (10b, 10c) isolantes respectives respectivement sous la forme d'une structure de type en réseau ayant des points (15) nodaux et des liaisons (16) de type en arc s'étendant entre les points (15) nodaux.

2. Procédé de fabrication suivant la revendication 1, **caractérisé en ce que** l'on applique au pistolet la couche (10c) isolante respective sur les têtes (14a, 14b) partielles de tous les enroulements (9a, 9b) déjà introduits à l'instant de l'application au pistolet de la couche (10c) isolante respective.

3. Procédé de fabrication suivant la revendication 1 ou 2, **caractérisé en ce qu'**avant l'introduction des enroulements (9a) de la phase introduite en premier, on applique au pistolet une autre couche (10a) isolante en matière plastique au paquet (7) de tôle et/ou, après l'introduction des enroulements (9c) de la phase introduite en dernier, on applique une autre couche (10d) isolante en matière plastique aux têtes (14a à 14c) partielles des enroulements (9a à 9c) de toutes les phases, dans lequel on forme, respectivement sous la forme d'une structure de type en réseau ayant des points (15) nodaux et des liaisons (16) de type en arc s'étendant entre les points (15) nodaux, lesdites autres couches (10a, 10d) isolantes appliquées au pistolet sur le paquet (7) de tôle et/ou après l'introduction des enroulements (9c) de la phase introduite en dernier aux têtes (14a à 14c) partielles des enroulements (9a à 9c) de toutes les phases.

4. Procédé suivant la revendication 1, 2, ou 3, **caractérisé en ce que** les couches (10a à 10d) isolantes sont constituées chacune d'une pluralité de cordons (13) superposés de la matière plastique.

5. Procédé suivant la revendication 4, **caractérisé en ce que** les dépose les couches (10a à 10d) isolantes au moyen d'une tête (11) à buse, qui a une buse (12) tournante de sortie de la matière plastique, **en ce que** la matière plastique sort de la buse (12) tournante de sortie sous la forme d'un cordon (13) et **en ce que** l'on déplace en translation dans son ensemble la tête (11) à buse, pendant la sortie de la matière plastique de la buse (12) tournante de sortie.

6. Procédé suivant l'une des revendications précédentes, **caractérisé en ce que** la matière plastique est constituée sous la forme d'une matière plastique se réticulant à l'humidité et/ou au contact de l'air ou sous la forme d'une matière plastique ne se réticulant pas à l'humidité et/ou au contact de l'air.

7. Procédé suivant l'une des revendications précédentes, **caractérisé en ce qu'**un point de fusion ou un point de transition à l'état vitreux de la matière plastique est d'au moins 120°C, mieux d'au moins 150°C, notamment d'au moins 180°C, par exemple d'au moins 200°C.

8. Procédé suivant l'une des revendications précédentes, **caractérisé en ce que** la matière plastique est une colle fusible thermoplastique, notamment une polyoléfine ou une matière thermodurcissable, notamment une matière thermodurcissable se réticulant à la température ambiante sous l'action de la lumière UV.

9. Stator d'une machine (1) électrique tournante,
- dans lequel le stator a un paquet (7) de tôle, dans lequel sont ménagées des encoches (8) pour les enroulements (9a à 9c) d'un système d'enroulement polyphasé,
- dans lequel les enroulements (9a à 9c) des diverses phases sont insérés séquentiellement les uns après les autres dans les encoches (8),
- dans lequel une couche (10b, 10c) isolante respective en matière plastique est injectée au pistolet entre les têtes (14a et 14c) partielles des enroulements (9a à 9c) de phases introduites directement les unes après les autres,
**caractérisé en ce que** les desdites couches (10b, 10c) isolantes respectives sont constituées sous la forme d'une structure respective de type en réseau, ayant des points (15) nodaux et des liaisons (16) de type en arc, s'étendant entre les points (15) nodaux.

10. Stator suivant la revendication 9, **caractérisé en ce que** la couche (10b, 10c) isolante respective est disposée, rapportée à la couche (10b, 10c) isolante respective, entre toutes les têtes (14a, 14b) partielles d'enroulement disposées près du stator (3) et les têtes (14b, 14c) partielles d'enroulement disposées plus loin du stator (3).

11. Stator suivant la revendication 9 ou 10, dans lequel respectivement une autre couche (10d) isolante en matière plastique est disposée entre le paquet (7) de tôle et les têtes (14a à 14c) partielles des enroulements (9a à 9C) et/ou sur les têtes (14a à 14c) partielles des enroulements (9a à 9c) du côté à distance du paquet (7) de tôle, dans lequel lesdites autres couches (10a, 10d) isolantes appliquées au pistolet au paquet (7) de tôle et/ou, après l'introduction des enroulements (9c) de la phase introduite en dernier, aux têtes (14a à 14c) partielles des enroulements (9a à 9c) de toutes les phases sont constituées sous la forme d'une structure respective de type en réseau ayant des points (15) nodaux et des liaisons (16) de type en arc s'étendant entre les points (15) nodaux.

12. Stator suivant l'une des revendications 9 à 11, **caractérisé en ce que** les couches (10a à 10d) isolantes sont constituées chacune d'une pluralité de cordons superposés de la matière plastique.

13. Stator suivant la revendication 12, **caractérisé en ce que** les couches (10a à 10d) isolantes sont constituées d'une pluralité d'anneaux d'un seul tenant ayant un diamètre, qui sont décalés les uns par rapport aux autres respectivement d'un décalage, et **en ce que** le décalage est plus petit que le diamètre.

14. Stator suivant l'une des revendications 9 à 13, **caractérisé en ce que** la matière plastique est constituée sous la forme d'une matière plastique se réticulant à l'humidité et/ou au contact de l'air ou sous la forme d'une matière plastique ne se réticulant pas à l'humidité et/ou au contact de l'air.

15. Stator suivant l'une des revendications 9 à 14, **caractérisé en ce qu'**un point de fusion ou un point de transition à l'état vitreux de la matière plastique est d'au moins 120°C, mieux d'au moins 150°C, notamment d'au moins 180°C, par exemple d'au moins 200°C.

16. Stator suivant l'une des revendications 9 à 15, **caractérisé en ce que** la matière plastique est une colle fusible thermoplastique, notamment une polyoléfine ou une matière thermodurcissable, notamment une matière thermodurcissable se réticulant à la température ambiante, sous l'action de la lumière UV.

17. Machine électrique tournante, dans laquelle la machine électrique a un rotor (2) et un stator (3),
**caractérisée en ce que** le stator (3) de la machine électrique est constitué sous la forme d'un stator suivant l'une des revendications 9 à 16.
